# EUROPÄISCHE PATENTSCHRIFT

(11) **EP 2 576 449 B1**
(45) Veröffentlichungstag und Bekanntmachung des Hinweises auf die Patenterteilung: **02.12.2015**
(21) Anmeldenummer: 11727410.0
(22) Anmeldetag: 01.06.2011
(51) Int. Cl.: C02F 1/52, C02F 11/04, C02F 101/10

(54) **VERFAHREN ZUR HERSTELLUNG EINES STOFFGEMISCHES ZUR VERRINGERUNG DER ENTSTEHUNG VON MAGNESIUMAMMONIUMPHOSPHAT (STRUVIT) IN KLÄRANLAGEN**
METHOD FOR PRODUCING A MIXTURE FOR REDUCING THE FORMATION OF MAGNESIUM AMMONIUM PHOSPHATE (STRUVITE) IN CLARIFICATION PLANTS
MÉTHODE POUR PRODUIRE UN MÉLANGE DE MATIÈRES DESTINÉ À RÉDUIRE L'APPARITION DE MAGNÉSIUM, D'AMMONIUM, ET DE PHOSPHATE (STRUVITE) DANS DES INSTALLATIONS D'ÉPURATION

(30) Priorität: 01.06.2010 DE 102010022381
(43) Veröffentlichungstag der Anmeldung: 10.04.2013
(73) Patentinhaber: Technische Universität Darmstadt, 64285 Darmstadt (DE)
(72) Erfinder: CORNEL, Peter, 61440 Oberursel (DE); PETZET, Sebastian, 64287 Darmstadt (DE)
(74) Vertreter: Patentanwälte Olbricht Buchhold Keulertz
(86) Internationale Anmeldenummer: PCT/EP2011/059107
(87) Internationale Veröffentlichungsnummer: WO 2011/151397

(56) Entgegenhaltungen:
- EP-A2- 1 000 904
- JP-A- H02 227 198
- JP-A- 2009 285 636
- PETZET S ET AL: "Phosphorus removal and recovery from sewage sludge as calcium phosphate by addition of calcium silicate hydrate compounds (CSH)", INTERNATIONAL CONFERENCE ON NUTRIENT RECOVERY FROM WASTEWATER STREAMS, IWA-PUBLISHING, LONDON, NEW YORK, 1. Januar 2009 (2009-01-01), Seiten 301-316, XP008141886, ISBN: 978-1-84339-232-3
- RENMAN A ET AL: "Long-term phosphate removal by the calcium-silicate material Polonite in wastewater filtration systems", CHEMOSPHERE, PERGAMON PRESS, OXFORD, GB, Bd. 79, Nr. 6, 1. April 2010 (2010-04-01), Seiten 659-664, XP026986203, ISSN: 0045-6535 [gefunden am 2010-03-27]
- MORIYAMA K, KOJIMA T, MINAWA Y, MATSUMOTO S, NAKAMACHI K: "Development of artificial seed crystal for crystallization of calcium phosphate", ENVIRONMENTAL TECHNOLOGY, November 2001 (2001-11), Seiten 1245-1252, XP002657913, Gefunden im Internet: URL:http://www.ncbi.nlm.nih.gov/pubmed/118 04345 [gefunden am 2011-08-26]
- U. BERG ET AL: "Phosphorus removal and recovery from wastewaterby tobermorite-seeded crystallisation of calcium phosphate", WATER SCIENCE & TECHNOLOGY, Bd. 53, Nr. 3, 1. Februar 2006 (2006-02-01), Seiten 131-138, XP055005655, ISSN: 0273-1223, DOI: 10.2166/wst.2006.084
- OTSUKA MASAYUKI: "Technology for phosphorus recovery from sewage and sludge. Phosphorus removal/recovery system for sewage. Development of phosphorus recovery technique by crystallization method with use of calcium silicate hydrate", Science Links Japan Environmental Solution Technology, 2005, Seite 1, XP002657914, Japan ISSN: 1347-9970 Gefunden im Internet: URL:http://sciencelinks.jp/j-east/display. php?id=000020070205A0589031 [gefunden am 2011-08-26]
- Rudy Kilian ET AL: "APPENDIX I Technical Memorandum No.6 Struvite and Chemical Precipitation Evaluation", , 17. Dezember 2009 (2009-12-17), XP055005663, Gefunden im Internet: URL:http://www.madsewer.org/Publications/F acilityPlans/SolidsHandling/Appendix I.pdf [gefunden am 2011-08-26]

## Beschreibung

### [Beschreibung und Einleitung des allgemeinen Gebietes der Erfindung]

Die vorliegende Erfindung betrifft eine Erfindung wodurch die Bildung von Magnesiumammoniumphosphat (MAP, Struvit) in Kläranlagen reduziert werden kann. Das MAP fällt in Kläranlagen als unerwünschtes Nebenprodukt an. MAP bildet Verkrustungen, die aufwändig entfernt werden müssen.

### [Stand der Technik]

Die derzeitige Abwasserbehandlung in Kläranlagen reduziert den Gehalt an Phosphor im Abwasser und überführt diesen in den Klärschlamm. Es kommt bei der Behandlung und Stabilisierung dieser Klärschlämme häufig zur Bildung von unerwünschtem MAP, welches aufwändig entfernt werden muss.

Ein Verfahren zur Entfernung und Wiedergewinnung von Phosphor aus Klärschlamm wurde von Petzet et al. beschrieben ("Phosphorus removal and recovery from sewage sludge as calcium phosphate by addition of calcium silicate hydrate compounds (CSH)", International conference on nutrient recovery from wastewater streams, IWA-Publishing, London, New York, 1. Januar 2009, Seiten 301-316, ISBN: 978-1-84339-232-3.). In Reaktoren R-0 bis R-3 weist demnach ein Klärschlamm 50 bis 60 g/l Trockensubstanz auf und Calciumsilikathydrat (CSH) wurde schrittweise auf eine Konzentration von 10 g/l erhöht. Weiterhin wird demgemäß ein Mischen des Klärschlamms mit CSH beschrieben. Bei diesem Verfahren kann eine pH-Abweichung von 0,5 erreicht werden. Die Körnung des eingesetzten CSH beträgt dabei 1,5 bis 3 mm. Die spezifische Oberfläche des CSH wird nicht angegeben.

Mit der JP H02 227198 A wird ein Verfahren zur Behandlung von Klärschlamm mit CSH vorgeschlagen, wobei CSH zu einem Klärschlamm hinzugegeben wird. Allerdings werden dabei insbesondere wiederum keine Angaben zur spezifischen Oberfläche des CSH gemacht.

### [Aufgabe]

Aufgabe der vorliegenden Erfindung ist es die Nachteile des Standes der Technik zu beseitigen, also ein verbessertes Verfahren zur Verringerung der Bildung von Magnesiumammoniumphosphat (MAP) in Kläranlagen bereitzustellen.

### [Lösung der Aufgabe]

Diese Aufgabe wird erfindungsgemäß durch ein Verfahren nach Anspruch 1 gelöst, somit durch den Einsatz eines Stoffgemisches, welches Calciumsilikathydrat (CSH) und Klärschlamm umfasst. Das hat den Vorteil, dass der Phosphor des Schlammwassers an das CSH gebunden werden kann. Das bewirkt eine leichtere Entwässerung des Klärschlamms. Zusätzlich wird durch die Einbringung des CSH der pH-Wert leicht erhöht. Durch die Bindung von Phosphor und Magnesium an das CSH wird ein Ausfall von MAP in den Leitungen und Behältern stark reduziert oder zum großen Teil verhindert. Gebildetes MAP verbleibt im Klärschlamm und kann dadurch leicht entsorgt werden.

Das CSH umfasst Tobermorit (Ca₅[Si₃O₈(OH)]₂· 2-5 H₂O ), Wollastonit, Xonolit, Hillebrandit, Porylit, Circosil, Kalksandstein oder eine Kombination dieser Stoffe. Das CSH enthält 50% bis 100%, bevorzugt 70% Tobermorit. Das CSH enthält Wasser von 0 bis 40%. Bevorzugt werden Wassergehalte um 30% eingesetzt. CSH wird in einer Körnung von 0,1 bis 1 mm eingesetzt. Bevorzugt werden Körnungen von 0,1 bis 0,5 verwendet. Körnungen von 0,1 bis 0,5 mm werden besonders dann verwendet, wenn das CSH im Klärschlamm verbleiben soll. Körnungen von 0,5 bis 1 mm werden besonders dann verwendet, wenn das phosphorbeladene CSH wieder abgetrennt werden soll. Das CSH muss keine besonders ausgeprägte Porenstruktur aufweisen, ist aber von Vorteil. CSH wird mit einer spezifischen Oberfläche von ca. 40 m³/g eingesetzt.

Wasserhaltiges CSH hat gegenüber getrocknetem CSH einen wesentlich günstigeren Preis.

Als Klärschlamm sind Primärschlamm, Überschussschlamm, Rücklaufschlamm, Rohschlamm (Gemisch aus Primärschlamm und Überschussschlamm), Belebtschlamm oder eine Kombinationen dieser Klärschlämme umfasst, wobei auch stabilisierte (anaerob mesophil/ thermophil und aerob mesophil/thermophil stabilisierte) Klärschlämme umfasst sind.

Die Dosierung des CSH erfolgt bevorzugt in den Überschussschlamm im Faulturm. Der Überschussschlamm liegt dabei in einer Konzentration von 20 bis 70 g/l, bevorzugt 40 bis 60 g/l vor. Das CSH ist in allen Kornformen anwendbar z.B. kugelförmig, eckig, kantig oder unregelmäßig.

Bisher ist man davon ausgegangen, das CSH bei Klärschlämmen mit einer Organikkonzentration von 20 bis 30 g/l kein Phosphor binden kann, da diese Klärschlämme zu hochviskos sind.

In den Experimenten konnte gezeigt werden, dass aber auch bei hochviskosen Klärschlämmen Phosphor durch CSH gebunden werden kann.

So wird besonders gut der Phosphor aus Überschussschlämmen an das CSH gebunden.

Eine Abtrennung des mit Phosphor beladenen CSH ist durchführbar. Bevorzugt wird das CSH aber im Klärschlamm belassen. Das mit Phosphor beladene CSH wird zu Düngemittel weiterverarbeitet.

Durch die relevante Senkung des Phosphorgehaltes im Schlammwasser mit wasserhaltigen CSH ist eine Reduktion der Bildung von unerwünschtem MAP durchführbar. Als weiterer Vorteil konnte der Klärschlamm in kürzerer Zeit entwässert werden und niedrigere Wassergehalte erreicht werden als ohne das CSH.

Das CSH wird zu einem Klärschlamm zugegeben. Der Klärschlamm befindet sich in einem strömenden oder ruhenden Zustand.

Die Zugabe des CSH zum Klärschlamm sollte vor, während oder nach der Stabilisierung des Klärschlamms erfolgen. Bevorzugt wird CSH zum Überschussschlamm oder zum Rohschlamm (Gemisch Primär- und Überschussschlamm) mit anschließender anaerober Stabilisierung zudosiert.

Die Verwendung von CSH hat den Vorteil, dass die Phosphatbindung auch bei einem hochviskosen Klärschlamm erfolgt. Damit ist es auch möglich, CSH nach der Stabilisierung zum Klärschlamm zuzugeben.

Das CSH wird so dosiert, dass 0,001 g bis 1 g CSH pro g Trockensubstanz Klärschlamm eingesetzt werden. Alternativ sind 0,05 g bis 0,5 g CSH pro g Trockensubstanz Klärschlamm dosierbar. Dies hängt aber auch von dem Klärschlamm ab. Bei nicht stabilisierten Klärschlämmen sind auch 0,001 g bis 0,1 g CSH pro g Trockensubstanz Klärschlamm dosierbar. Bei stabilisierten Klärschlämmen können 0,005 g bis 0,5 g, bevorzugt 0,024 g bis 0,1 g CSH pro g Trockensubstanz Klärschlamm verwendet werden.

Alternativ werden 0,1 g bis 0,3 g CSH pro g Trockensubstanz Klärschlamm eingesetzt. Es sind auch 0,125 g CSH pro g Trockensubstanz Klärschlamm einsetzbar.

Es wird dabei darauf Wert gelegt, dass sich der pH-Wert nicht oder nur in geringen Grenzen ändert. Es wird eine pH-Wert - Erhöhung um 0,4 bevorzugt. Die Dosierung wird so eingestellt, dass eine pH - Änderung von 0,8 nicht überschritten wird. Dies ist besonders bei einer Dosierung im Stabilisierungsreaktor wichtig, damit die biologischen Abbauprozesse nicht beeinträchtigt werden. Der pH-Wert liegt im Bereich von 5 bis 8,5. Meist liegt der pH-Wert des Faulturmes zwischen 6,8 bis 7,3 was einem neutralen Medium entspricht. Das Verfahren läuft im sauren, neutralen und im alkalischen Medium ab. Es ist nicht auf einen bestimmten pH-Bereich beschränkt.

Die Dosierungsmenge des CSH ist auch vom Phosphatgehalt des Klärschlamms abhängig. So enthält der Überschussschlamm ca. 80% des Phosphats, während die Phosphatbelastung des Primärschlamms wesentlich geringer ist.

Das CSH liegt anschließend in einem Verhältnis von 1:40 bis 1:0,5 zum Feststoff des Klärschlamms vor. Alternativ ist ein Verhältnis von 1:100 bis 1:0,5 von CSH zum Feststoff des Klärschlamms einstellbar.

Während oder nachdem das CSH in dem Schlamm eingebracht wurde, erfolgt eine Vermischung des Klärschlamms mit dem CSH.

Das CSH bleibt ca. 5 bis 20 Tage in dem Klärschlamm. Das hat den Vorteil, dass mit dieser langen Verweilzeit der Phosphor nicht nur oberflächig, sondern in das Material des CSH aufgenommen werden kann.

### [Ausführungsbeispiele]

Überschussschlamm wird mit einer Konzentration von 8 g/l Festsubstanz aus dem Nachklärbecken entfernt. Bevorzugt wird zum Überschussschlamm CSH mit einer Körnung von 0,1 bis 0,5 mm dosiert. Dieser wird mit Anteilen des Primärschlamms gemischt und zur Stabilisierung geleitet. Üblicherweise erfolgt dann eine Eindickung auf ca. 40 bis 50 g/l Festsubstanz. Das eingedickte Klärschlammgemisch wird in die Stabilisierung geleitet und hat nach der Stabilisierung ca. 20 bis 30 g/l Festsubstanz. Um den Vorteil einer verbesserten Entwässerung nutzen zu können sollte das CSH spätestens nach der Stabilisierung dosiert werden.

Es sollte dabei ein Feststoffverhältnis von 1:40 bis 1:0,5 des CSH zum Feststoff des Klärschlamms eingehalten werden. Alternativ in auch ein Verhältnis von CSH zum Feststoff des Klärschlamms von 1:100 bis 1:0,5 einhaltbar.

Die Phosphorbelastung des Schlammwassers konnte von ca. 220 mg/l auf 25 mg/l gesenkt werden.

Überschussschlamm wird mit einer Konzentration von 8 g/l Festsubstanz aus dem Nachklärbecken entfernt und eingedickt. Die Umwälzung des Überschussschlamms erfolgt über ein Bypass. Das CSH wird aus einem Putzsilo mit automatischer Dosierung entnommen und in dem Bypass mit einem Teil des umgewälzten Überschussschlamms vermischt. Dann wird diese hochkonzentrierte CSH-Lösung in den Faulturm gepumpt, wo sich die konzentrierte Lösung mit dem restlichen Überschussschlamm vermischt. Bevorzugt wird zum Überschussschlamm CSH mit einer Körnung von 0,5 bis 1 mm dosiert. Alternativ werden Bruchteile von Porenbeton-Formsteinen dosiert. Dieser wird mit Anteilen des Primärschlamms gemischt und zur Stabilisierung geleitet.

Es sollte dabei ein Feststoffverhältnis von 1:100 bis 1:0,5 des CSH zum Feststoff des Klärschlamms eingehalten werden.

Die Phosphorbelastung des Schlammwassers konnte von ca. 225 mg/l auf 20 mg/l gesenkt werden.

Eine Rückgewinnung des phosphorbeladenen CSH ist mit einer Abtrennung durch einen Hydrozyklon oder ein Sieb möglich.

### [Abbildungslegenden und Bezugszeichenliste]

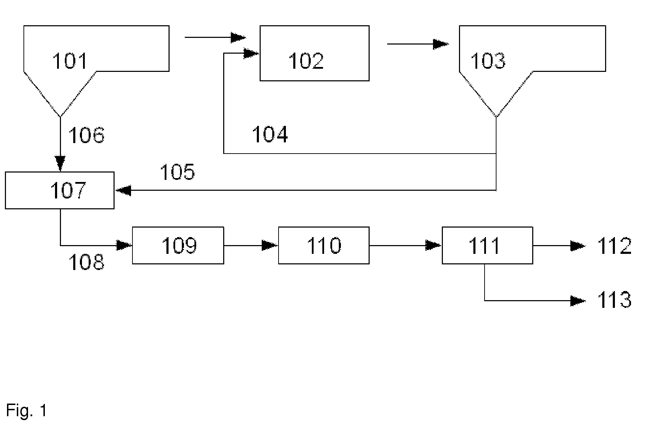

Fig. 1 Schema einer Kläranlage
- 101:: Vorklärbecken
- 102:: Belebtbecken
- 103:: Nachklärbecken
- 104:: Rücklaufschlamm
- 105:: Überschussschlamm
- 106:: Primärschlamm
- 107:: Mischvorrichtung für Primär und Überschussschlamm
- 108:: Rohschlamm (Gemisch Primär und Überschussschlamm)
- 109:: Voreindicker
- 110:: Stabilisierungsreaktor
- 111:: Nacheindicker
- 112:: Schlammwasser
- 113:: Schlammentsorgung

## Patentansprüche

1. Verfahren zur Herstellung eines Gemisches zur Verringerung der Bildung von Magnesiumammoniumphosphat (MAP) in Kläranlagen, **gekennzeichnet durch** die Schritte:
- Zugabe von Calciumsilikathydrat (CSH) zu einem ruhenden oder strömenden Klärschlamm, in einer Dosierung des Calciumsilikathydrats (CSH) in einem Bereich von 0,001 g bis 1 g pro g Trockensubstanz des Klärschlamms, so dass der pH-Wert im Klärschlamm nur um max. 0,8 steigt und wobei das CSH in einer Körnung von 0,1 bis 1 mm und mit einer spezifischen Oberfläche von ca. 40 m²/g eingesetzt wird,
- Mischung des CSH mit dem Klärschlamm.

2. Verfahren nach Anspruch 1, **dadurch gekennzeichnet, dass** das Calciumsilikathydrat (CSH) Tobermorit, Porylit, Circosil, Kalksandstein oder eine Kombination dieser Stoffe umfasst.

3. Verfahren nach einem der Ansprüche 1 oder 2, **dadurch gekennzeichnet, dass** das Calciumsilikathydrat (CSH) 50 % bis 100% Tobermorit, bevorzugt 70 % Tobermorit enthält.

4. Verfahren nach einem der Ansprüche 1 bis 3, **dadurch gekennzeichnet, dass** das Calciumsilikathydrat (CSH) 0 % bis 40 % Wasser, bevorzugt 30 % Wasser enthält.

5. Verfahren nach einem der Ansprüche 1 bis 4, **dadurch gekennzeichnet, dass** der Klärschlamm Primärschlamm, Überschussschlamm, Rücklaufschlamm, Rohschlamm, Belebtschlamm oder eine Kombination dieser Klärschlämme umfasst, wobei auch stabilisierte Klärschlamme umfasst sind.

6. Verfahren nach einem der vorangegangenen Ansprüche, **dadurch gekennzeichnet, dass** der Klärschlamm Überschussschlamm ist und vor der Zugabe des Calciumsilikathydrats (CSH) mit einer Konzentration von 8 g/l Festsubstanz aus einem Nachklärbecken entfernt wird.

7. Verfahren nach Anspruch 6, **dadurch gekennzeichnet, dass** der Überschussschlamms nach der Zugabe des Calciumsilikathydrats (CSH) mit Anteilen des Primärschlamms gemischt und zur Stabilisierung geleitet wird.

## Claims

1. A method for producing a mixture for reduction of the formation of magnesium ammonium phosphate (MAP) in clarification plants, **characterized by** the steps:
- Addition of calcium silicate hydrate (CSH) to a stationary or flowing sewage sludge, in a dosage of calcium silicate hydrate (CSH) in a range of 0.001 g to 1 g per g of dry matter of the sewage sludge, so that the pH value in the sewage sludge only increases by max. 0.8 and wherein the CSH is used in a grain size of 0.1 to 1 mm and with a specific surface of approx. 40 m²/g,
- Mixture of the CSH with the sewage sludge.

2. A method according to claim 1, **characterized in that** the calcium silicate hydrate (CSH) comprises tobermorite, porylit, circosil, calcareous sandstone, or a combination of these substances.

3. A method according to one of claims 1 or 2, **characterized in that** the calcium silicate hydrate (CSH) contains 50% to 100% tobermorite, preferably 70% tobermorite.

4. A method according to one of claims 1 to 3, **characterized in that** the calcium silicate hydrate (CSH) contains 0% to 40% water, preferably 30% water.

5. A method according to one of claims 1 to 4, **characterized in that** the sewage sludge comprises primary sludge, surplus sludge, return sludge, raw sludge, activated sludge or a combination of these forms of sewage sludge, wherein stabilized sewage sludge is also included.

6. A method according to one of the preceding claims, **characterized in that** the sewage sludge is surplus sludge and before the addition of calcium silicate hydrate (CSH) with a concentration of 8 g/l solid substance is removed from a secondary clarification tank.

7. A method according to claim 6, **characterized in that** after the addition of the calcium silicate hydrate (CSH) the surplus sludge is mixed with portions of the primary sludge and is routed for stabilization.

## Revendications

1. Procédé de fabrication d'un mélange permettant de réduire la formation de phosphate de magnésium et d'ammonium (MAP) dans des installations d'épuration, **caractérisé par** les étapes suivantes :
- addition d'hydrate de silicate de calcium (CSH) à des boues de curage au repos ou en circulation, dans un dosage de l'hydrate de silicate de calcium (CSH) dans une plage de 0,001 g à 1 g par g de substance sèche des boues de curage de sorte que la valeur du pH dans les boues de curage n'augmente qu'au maximum de 0,8 et dans lequel le CSH est utilisé en granulométrie de 0,1 à 1 mm et avec une surface spécifique d'environ 40 m²/g, et
- mélange du CSH aux boues de curage.

2. Procédé selon la revendication 1, **caractérisé en ce que** l'hydrate de silicate de calcium (CSH) comprend la Tobermorite, la Porylite, le Circosil, le grès argilocalcaire ou une combinaison de ces matériaux.

3. Procédé selon l'une quelconque des revendications 1 ou 2, **caractérisé en ce que** l'hydrate de silicate de calcium (CSH) contient 50 % à 100 % de Tobermorite, de préférence 70 % de Tobermorite.

4. Procédé selon l'une quelconque des revendications 1 à 3, **caractérisé en ce que** l'hydrate de silicate de calcium (CSH) contient 0 % à 40 % d'eau, de préférence 30 % d'eau.

5. Procédé selon l'une quelconque des revendications 1 à 4, **caractérisé en ce que** les boues de curage comprennent des boues primaires, des boues excédentaires, des boues activées de retour, des boues brutes, des boues activées ou une combinaison de ces boues de curage, dans lequel il y a également des boues de curage stabilisées.

6. Procédé selon l'une quelconque des revendications précédentes, **caractérisé en ce que** les boues de curage sont des boues excédentaires et sont éliminées d'un bassin de décantation secondaire avant l'addition de l'hydrate de silicate de calcium (CSH) avec une concentration de 8 g/l de substance sèche.

7. Procédé selon la revendication 6, **caractérisé en ce que** les boues excédentaires sont mélangées à des fractions des boues primaires après addition de l'hydrate de silicate de calcium (CSH) et amenées à la stabilisation.
